# EUROPEAN PATENT APPLICATION

(11) **EP 4 803 658 A1**
(43) Date of publication of application: **09.09.2026**
(21) Application number: 24885747.6
(22) Date of filing: 30.10.2024
(51) Int. Cl.: C23F 1/20, C22C 21/00, C23F 1/00, C23G 1/22, H01G 11/68, H01G 11/70, H01M 4/66, H01M 4/70

(54) **PERFORATED ALUMINUM FOIL AND METHOD FOR MANUFACTURING SAME**

(30) Priority: 31.10.2023 JP 2023186150
(71) Applicant: MITSUBISHI GAS CHEMICAL COMPANY, INC., Chiyoda-ku Tokyo 100-8324 (JP)
(72) Inventor: SUGIMOTO, Takashi, Ashigarakami-gun, Kanagawa 258-0112 (JP); IKEDA, Kaduhiko, Ashigarakami-gun, Kanagawa 258-0112 (JP); TAMAI, Satoshi, Ashigarakami-gun, Kanagawa 258-0112 (JP)
(74) Representative: Müller-Boré & Partner Patentanwälte PartG mbB
(86) International application number: PCT/JP2024/038657
(87) International publication number: WO 2025/094980

(57) **Abstract**

The present invention relates to: a perforated aluminum foil suitably used for a current collector for a power storage device; and a method for manufacturing same. The present invention provides a method for manufacturing a perforated aluminum foil having a plurality of through-holes penetrating in the thickness direction thereof, the method comprising: an alkaline cleaning step for bringing a first aqueous composition containing 1-10 mass percent inclusive of an alkali into contact with the surface of an aluminum foil; and a through-hole forming step for forming the through-hole in the thickness direction of the aluminum foil by bringing a second aqueous composition containing 1-30 mass percent inclusive of halide ions into contact with the surface of the aluminum foil within 20 minutes after the alkaline cleaning step. Also provided is a perforated aluminum foil having a prescribed breaking strength, average pore diameter, and maximum pore diameter/average pore diameter.

## Description

### TECHNICAL FIELD

The present invention relates to a perforated aluminum foil and a method for producing the same.

### BACKGROUND ART

In recent years, demand for electrical storage devices, in particular, lithium-ion capacitors (LICs), lithium ion secondary batteries (LIBs), and electric double layer capacitors (EDLCs), has been increasing in applications including portable information terminals, portable electronic equipment, electric vehicles, hybrid electric vehicles, and stationary power storage systems. As current collectors to be used for positive or negative electrodes of these electrical storage devices, perforated aluminum foils with through holes formed therein for pre-doping with lithium ions are known.

For example, in lithium-ion capacitors, activated carbon, which is similar to that used in electric double layer capacitors, is used for the positive electrode, a carbon material, which is similar to that used in lithium ion secondary batteries, is used for the negative electrode, and a balance between high output density and high energy density can be achieved. However, to cope with an increase in capacity, it is required to efficiently perform lithium ion pre-doping, and it is demanded to form numerous fine through holes to achieve good air permeability (short air permeation time) of perforated aluminum foils.

Meanwhile, when numerous through holes are formed, the tensile strength of a perforated aluminum foil inevitably decreases. When the tensile strength of the perforated aluminum foil is too low, it is impossible to employ a continuous process such as a roll-to-roll process in which a roll-shaped long current collector is passed through a conveyor line and continuously processed, resulting in poor production efficiency. Therefore, it has been desired to develop a technique of achieving good air permeability of perforated aluminum foils while suppressing the decrease in tensile strength.

As methods for forming fine through holes, etching technologies are known.

For example, Patent Literature 1 describes a method for forming through holes in an aluminum foil by means of electrolytic etching, wherein an aqueous solution containing hydrochloric acid is used as an electrolytic solution. However, this method has problems in terms of work safety because processing is performed at relatively high temperatures. Moreover, it requires high cost because through holes are formed at relatively high temperatures, and in addition, by means of electrolytic etching.

Further, Patent Literature 2 describes a method in which a film of aluminum oxide or aluminum hydroxide is formed on the surface of an aluminum foil; portions of the film where through holes are desired to be formed are removed by means of laser processing; and then through holes are formed in the aluminum foil by means of electrolytic etching, wherein an aqueous solution containing sulfuric acid and nitric acid is used as an electrolytic solution. However, this method requires many steps, and requires high cost because a laser is used.

### CITATION LIST

### PATENT LITERATURES

Patent Literature 1: Japanese Laid-Open Patent Publication No. 2011-208254
Patent Literature 2: International Publication WO2017/163913 pamphlet

### SUMMARY OF INVENTION

### TECHNICAL PROBLEM

It has been desired to develop a perforated aluminum foil suitably used as a current collector for electrical storage devices and a technology for producing the same.

### SOLUTION TO PROBLEM

The present invention relates to a perforated aluminum foil and a method for producing the same as described below.
[1] A method for producing a perforated aluminum foil which has a plurality of through holes penetrating therethrough in the thickness direction, the method comprising:
   an alkaline cleaning step in which a first aqueous composition containing 1% by mass or more and 10% by mass or less of alkali is brought into contact with the surface of an aluminum foil; and
   a through hole forming step in which a second aqueous composition containing 1% by mass or more and 30% by mass or less of halide ions is brought into contact with the surface of the aluminum foil within 20 minutes after the alkaline cleaning step so as to form the through holes in the thickness direction of the aluminum foil.
[2] The method for producing a perforated aluminum foil according to item [1], wherein the alkali is a hydroxide of an alkali metal or an alkaline earth metal.
[3] The method for producing a perforated aluminum foil according to item [1] or [2], wherein the halide ions are chloride ions.
[4] The method for producing a perforated aluminum foil according to any one of items [1] to [3], wherein the aluminum foil has a thickness of 1 µm or more and 50 µm or less.
[5] The method for producing a perforated aluminum foil according to any one of items [1] to [4], wherein the aluminum purity of the aluminum foil is 98% by mass or more but less than 99.9% by mass.
[6] The method for producing a perforated aluminum foil according to any one of items [1] to [5], wherein in the alkaline cleaning step, the processing temperature is 10°C or higher and 50°C or lower and the processing time is 5 seconds or more and 120 seconds or less.
[7] The method for producing a perforated aluminum foil according to any one of items [1] to [6], wherein in the through hole forming step, the processing temperature is 10°C or higher and 50°C or lower and the processing time is 5 seconds or more and 120 seconds or less.
[8] A perforated aluminum foil which has a plurality of through holes penetrating therethrough in the thickness direction, wherein:
   the perforated aluminum foil has a thickness of 1 µm or more and 50 µm or less;
   the breaking strength is 4 N/10 mm or more and 20 N/10 mm or less;
   the average hole diameter is 1 µm or more and 50 µm or less, and a ratio of the maximum hole diameter to the average hole diameter is 4 or less.
[9] The perforated aluminum foil according to item [8], wherein:
   the number of the holes is 1.0 x 10³ holes/cm² or more and 5.0 x 10⁴ holes/cm² or less;
   the aperture ratio is 10% or less; and
   the air permeability is less than 70 seconds.
[10] A current collector for electrical storage devices, comprising the perforated aluminum foil according to item [8] or [9].

### ADVANTAGEOUS EFFECTS OF INVENTION

According to the present invention, a perforated aluminum foil suitably used as a current collector for electrical storage devices can be produced by a simple and easy method in which alkaline cleaning and subsequent chemical etching are performed.

### BRIEF DESCRIPTION OF DRAWINGS

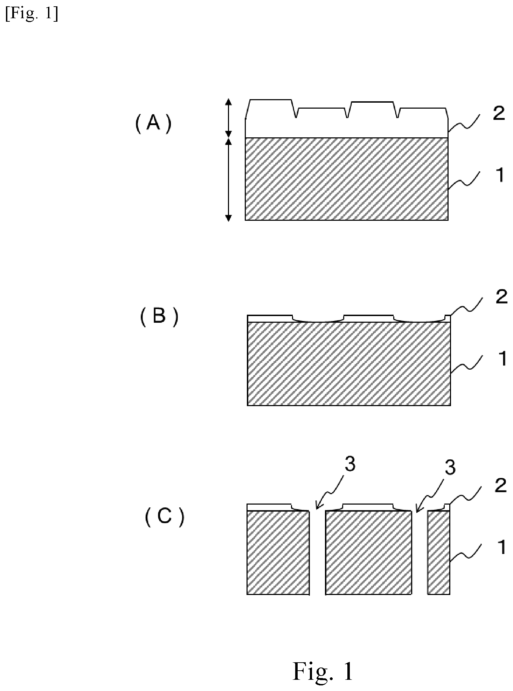

[FIG.1] FIG. 1 illustrates the process of the method for producing the perforated aluminum foil of the present invention.

### DESCRIPTION OF EMBODIMENTS

### 1. Method for Producing Perforated Aluminum Foil

The present invention relates to a method for producing a perforated aluminum foil which has a plurality of through holes penetrating therethrough in the thickness direction, and the method is characterized in that it comprises:
an alkaline cleaning step in which a first aqueous composition containing 1% by mass or more and 10% by mass or less of alkali is brought into contact with the surface of an aluminum foil; and
a through hole forming step in which a second aqueous composition containing 1% by mass or more and 30% by mass or less of halide ions is brought into contact with the surface of the aluminum foil within 20 minutes after the alkaline cleaning step so as to form the through holes in the thickness direction of the aluminum foil.

Figure 1 is a schematic diagram illustrating the process of the method for producing the perforated aluminum foil of the present invention. The following description will be made with reference to Figure 1.

As shown in Figure 1 (A), an oxide film (passivation film) 2 is usually formed on the surface of an aluminum foil 1.

In the alkaline cleaning step, a first aqueous composition containing 1% by mass or more and 10% by mass or less of alkali is brought into contact with the surface of the aluminum foil 1 (or the surface of the oxide film 2). By doing this, the oxide film 2 on the surface of the aluminum foil is partially removed as shown in Figure 1 (B). The oxide film 2 is not required to be completely removed, and it is sufficient when it is removed to an extent where the halide ions can react with at least a part of the surface of the aluminum foil in the next step.

After the alkaline cleaning step, a water washing process, in which the aluminum foil 1 is suitably washed with water to remove the alkali adhering to the surface of the aluminum foil 1, may be performed according to need.

Within 20 minutes after the alkaline cleaning step, the second aqueous composition containing 1% by mass or more and 30% by mass or less of the halide ions is contacted. As a result, the halide ions react with the surface of the aluminum foil 1 from which the oxide film 2 has been partially removed, thereby forming the through holes penetrating through the aluminum foil 1 in the thickness direction thereof, as shown in Figure 1 (C).

After the formation of the through holes, a water washing process, in which the aluminum foil (i.e., perforated aluminum foil) 1 is suitably washed with water to remove the halide ions adhering to the surface of the aluminum foil 1, may be performed according to need.

As described above, according to the present invention, through holes can be formed in the thickness direction of an aluminum foil by a simple and easy method in which an aqueous composition containing halide ions is brought into contact with the surface of the aluminum foil within 20 minutes after alkaline cleaning thereof. According to a preferred embodiment, a perforated aluminum foil obtained has an excellent balance between air permeability and tensile strength because the hole diameter of the through holes is relatively uniform, and therefore the perforated aluminum foil can be suitably used as a current collector for electrical storage devices, in particular, as a current collector for lithium-ion capacitors.

### <Alkaline Cleaning Step>

In the alkaline cleaning step, a first aqueous composition containing 1% by mass or more and 10% by mass or less of alkali is brought into contact with the surface of an aluminum foil. By performing this step, the oxide film (passivation film) on the surface of the aluminum foil can be partially removed, and it can make it easier to control the formation of through holes by subsequent chemical etching.

The aluminum foil is not particularly limited as long as it is an alloy plate containing aluminum as a main component and a slight amount of a foreign element and can be used as a current collector for electrical storage devices. Examples of the foreign element include Fe, Si, Cu, Mg, Zn, Ti, V, Ga, Cr, Zr, B, Mn, Ni, and Li.

The aluminum purity is not particularly limited, but it is preferably 98% by mass or more, and may be 98.5% by mass or more, 99% by mass or more, 99.3% by mass or more, 99.5% by mass or more, or 99.75% by mass or more. Further, the upper limit is not particularly limited and may be 100% by mass, but it is preferably less than 99.9% by mass, and may be less than 99.8% by mass, less than 99.7% by mass, less than 99.6% by mass, or less than 99.5% by mass.

As the aluminum foil, either a hard aluminum foil or a soft aluminum foil may be used. The aluminum foil is not particularly limited, but A1000 series and A8000 series are preferred, and A1N30, A8011, A8021, or A8079 may be used.

The thickness of the aluminum foil is preferably 50 µm or less, more preferably 40 µm or less, and even more preferably 25 µm or less. The lower limit of the thickness is not particularly limited, but it is usually 1 µm or more. When it is within the above-described range, the aluminum foil can be suitably used as a current collector for electrical storage devices, in particular, as a current collector for lithium-ion capacitors.

The first aqueous composition to be used in the alkaline cleaning step contains 1% by mass or more and 10% by mass or less of alkali.

As the alkali, a hydroxide of an alkali metal such as sodium hydroxide and potassium hydroxide, or a hydroxide of an alkaline earth metal such as magnesium hydroxide, calcium hydroxide, strontium hydroxide, and barium hydroxide is preferred. A hydroxide of an alkali metal is more preferred, and sodium hydroxide is particularly preferred. As the alkali, two or more types may be used in combination according to need.

The content (concentration) of the alkali in the first aqueous composition is 1% by mass or more and 10% by mass or less, preferably 2.0% by mass or more and 8.0% by mass or less, more preferably 3.0% by mass or more and 7.0% by mass or less, particularly preferably 4.0% by mass or more and 6.0% by mass or less, and still more preferably 4.5% by mass or more and 5.5% by mass or less.

Further, the range of the content of the alkali contained in the first aqueous composition may have the lower limit of any one of 1.0% by mass, 2.0% by mass, 3.0% by mass, 4.0% by mass, 4.5% by mass, and 5.0% by mass, and the upper limit of any one of 10.0% by mass, 8.0% by mass, 7.0% by mass, 6.0% by mass, and 5.5% by mass.

The first aqueous composition may contain an additive as a component other than the alkali within a range in which the effects of the present invention are exerted. Examples of the additive include an organic solvent, a surfactant, a pH adjuster, and a reducing agent. The concentration of the additive that may be contained in the first aqueous composition is preferably 10% by mass or less, more preferably 5.0% by mass or less, even more preferably 2.0% by mass or less, and particularly preferably 1.0% by mass or less.

The first aqueous composition contains water, in particular, ion-exchanged water or ultrapure water. The content of water is the remainder in the first aqueous composition, and it is preferably 70% by mass or more, more preferably 80% by mass or more, even more preferably 90% by mass or more, and may be 95% by mass or more. The upper limit of the content of water is 99% by mass or less, and may be 98% by mass or less, 97% by mass or less, 96% by mass or less, or 95% by mass or less.

The processing temperature (temperature of the first aqueous composition) in the alkaline cleaning step is preferably 10°C or higher and 50°C or lower, more preferably 20°C or higher and 45°C or lower, and even more preferably 25°C or higher and 40°C or lower. When the temperature of the first aqueous composition is 10°C or higher, the cleaning process can be efficiently performed in a short time. Meanwhile, when the temperature of the first aqueous composition is 50°C or lower, the change in the liquid composition can be suppressed, and the alkaline cleaning conditions can be kept constant. Further, the operation can be performed safely.

The method for bringing the first aqueous composition into contact with the aluminum foil is not particularly limited. For example, it is possible to employ a method for contacting with the aluminum foil by means of dropping (single wafer spin process), spraying (spray treatment) or the like of the first aqueous composition, or a wet etching method such as a method of immersing the aluminum foil in the first aqueous composition.

The processing time in the alkaline cleaning step is preferably 5 seconds or more and 120 seconds or less, more preferably 8 seconds or more and 100 seconds or less, and even more preferably 10 seconds or more and 60 seconds or less. The processing time may be suitably determined in consideration of various conditions such as the surface state of the aluminum foil, the content of the alkali in the first aqueous composition, the processing temperature, and the contact method. In this regard, the processing time refers to the time for contacting the first aqueous composition with the surface of the aluminum foil. For example, it is the time during which the aluminum foil is immersed in the first aqueous composition, or the time from when the first aqueous composition is sprayed on the surface of the aluminum foil to when the first aqueous composition is removed by water or the like or to when the first aqueous composition is removed by the contact of the second aqueous composition in the subsequent through hole forming step.

### <Water Washing Process>

Preferably, the aluminum foil subjected to alkaline cleaning is suitably washed with water according to need to remove the alkali adhering to the surface of the aluminum foil. The water is preferably water from which metal ions, organic impurities, particles, etc. have been removed by distillation, ion exchange treatment, filtering treatment, adsorption treatment or the like, and pure water or ultrapure water is particularly preferred.

### <Through Hole Forming Step>

In the through hole forming step, a second aqueous composition containing 1% by mass or more and 30% by mass or less of halide ions is brought into contact with the surface of the aluminum foil within 20 minutes after the alkaline cleaning step to form the through holes in the thickness direction of the aluminum foil.

By performing the contact of the second aqueous composition containing 1% by mass or more and 30% by mass or less of the halide ions within 20 minutes after the alkaline cleaning step, the through holes can be formed in the aluminum foil.

In this regard, "within 20 minutes after the alkaline cleaning step" means "within 20 minutes after the completion of processing in the alkaline cleaning step", that is, "within 20 minutes after the first aqueous composition is removed from the surface of the aluminum foil". The through hole forming step is performed preferably within 10 minutes, more preferably within 5 minutes, even more preferably within 3 minutes, and particularly preferably within 2 minutes or within 1 minute after the alkaline cleaning step. By performing the through hole forming step as quickly as possible after the alkaline cleaning step as described above, the process can be performed before a new passivation film is formed on the aluminum foil surface, and therefore, an effect that through holes can be formed more uniformly is achieved.

The second aqueous composition to be used in the through hole forming step contains 1% by mass or more and 30% by mass or less of the halide ions. The oxide film (passivation film) is partially removed by alkaline cleaning, the halide ions react with the surface of the aluminum foil in that part, and in this way, the through holes can be formed in the aluminum foil.

The type of the halide ions is not particularly limited, and may be, for example, fluoride ions, chloride ions, bromide ions, or iodide ions, but chloride ions are more preferred from the viewpoint of ease of handling and economic efficiency.

The halogen compound as the source of the halide ions to be used for the second aqueous composition is not particularly limited. Examples thereof include a halide of an alkali metal such as sodium halide and potassium halide, a halide of an alkaline earth metal such as calcium halide, ammonium halide, copper halide, and hydrogen halide. Among them, a halide of an alkali metal or hydrogen halide is preferred, and hydrochloric acid or sodium chloride is more preferred from the viewpoint of more effective and reliable formation of through holes.

As the halogen compound, one material may be used solely, or two or more materials may be used in combination.

The content of the halide ions contained in the aqueous composition is 1% by mass or more and 30% by mass or less, preferably 2.0% by mass or more and 25% by mass or less, more preferably 3.0% by mass or more and 20% by mass or less, particularly preferably 5.0% by mass or more and 15% by mass or less, and still more preferably 8% by mass or more and 15% by mass or less.

Further, the range of the content of the halide ions contained in the second aqueous composition may have the lower limit of any one of 1.0% by mass, 2.0% by mass, 3.0% by mass, 5.0% by mass, and 8% by mass, and the upper limit of any one of 30% by mass, 25% by mass, 20% by mass, 18% by mass, and 15% by mass.

The second aqueous composition may contain an additive as a component other than the halide ions within a range in which the effects of the present invention are exerted. Examples of the additive include an organic solvent, a surfactant, a pH adjuster, and an oxidizing agent. The concentration of the additive that may be contained in the second aqueous composition is preferably 10% by mass or less, more preferably 5.0% by mass or less, even more preferably 2.0% by mass or less, and particularly preferably 1.0% by mass or less.

The second aqueous composition contains water, in particular, ion-exchanged water or ultrapure water. The content of water is the remainder in the second aqueous composition, and it is preferably 70% by mass or more, more preferably 80% by mass or more, even more preferably 90% by mass or more, and may be 95% by mass or more. The upper limit of the content of water is 99% by mass or less, and may be 98% by mass or less, 97% by mass or less, 96% by mass or less, or 95% by mass or less.

The processing temperature (temperature of the second aqueous composition) in the through hole forming step is preferably 10°C or higher and 50°C or lower, more preferably 15°C or higher and 45°C or lower, and even more preferably 20°C or higher and 40°C or lower. When the temperature of the second aqueous composition is 10°C or higher, through holes can be efficiently formed in a short time. Meanwhile, when the temperature of the second aqueous composition is 50°C or lower, the change in the liquid composition can be suppressed, and the etching conditions can be kept constant. Further, the operation can be performed safely.

The method for bringing the second aqueous composition into contact with the aluminum foil after the alkaline cleaning step is not particularly limited. For example, it is possible to employ a method for contacting with the aluminum foil by means of dropping (single wafer spin process), spraying (spray treatment) or the like of the second aqueous composition, or a wet etching method such as a method of immersing the aluminum foil in the second aqueous composition.

The processing time in the through hole forming step is preferably 5 seconds or more and 120 seconds or less, more preferably 8 seconds or more and 100 seconds or less, and even more preferably 10 seconds or more and 60 seconds or less. The processing time may be suitably determined in consideration of various conditions such as the surface state of the aluminum foil, the content of the halide ions in the second aqueous composition, the processing temperature, and the contact method. Thus, the present invention is excellent in that the formation of through holes progresses without taking a long time. In this regard, the processing time refers to the time for contacting the second aqueous composition with the surface of the aluminum foil after the alkaline cleaning step. For example, it is the time during which the aluminum foil is immersed in the second aqueous composition, or the time from when the second aqueous composition is sprayed on the surface of the aluminum foil to when the second aqueous composition is removed by water or the like.

### <Water Washing Process>

Preferably, the aluminum foil in which through holes have been formed (i.e., perforated aluminum foil) is suitably washed with water according to need to remove the halide ions adhering to the surface of the aluminum foil. The water is preferably water from which metal ions, organic impurities, particles, etc. have been removed by distillation, ion exchange treatment, filtering treatment, adsorption treatment or the like, and it is particularly preferably pure water or ultrapure water.

According to the above-described method, the perforated aluminum foil can be obtained just by substantially two-step chemical treatment or by further performing appropriate washing (e.g., washing with water) according to need. According to the present invention, the processing conditions are mild and the required time is short, and therefore the perforated aluminum foil can be efficiently produced. Further, according to a preferred embodiment of the present invention, the through holes can be formed with the hole diameters thereof being uniform, and reduction in tensile strength of the obtained perforated aluminum foil can be suppressed, and therefore, by continuously processing the perforated aluminum foil using a continuous process such as a roll-to-roll process, production efficiency can be further improved.

For example, dropping devices, spraying devices or immersion devices for the first aqueous composition and the second aqueous composition are installed between rolls of aluminum foil, and while an unprocessed aluminum foil is unrolled and moved from the roll on which the unprocessed aluminum foil is wound up using a roll-to-roll process, the aluminum foil is passed near the above-described devices to supply the first aqueous composition and the second aqueous composition, and optionally water for removing the aqueous compositions, and the perforated aluminum foil with the through holes formed therein is wound up, thereby obtaining a roll. The obtained perforated aluminum foil may be subjected to drying treatment before being wound up on a roll.

### 2. Perforated Aluminum Foil

The perforated aluminum foil of the present invention has a plurality of through holes penetrating therethrough in the thickness direction, and it is characterized in that:
the perforated aluminum foil has a thickness of 1 µm or more and 50 µm or less;
the breaking strength is 4 N/10 mm or more and 20 N/10 mm or less;
the average hole diameter is 1 µm or more and 50 µm or less, and a ratio of the maximum hole diameter to the average hole diameter is 4 or less. The perforated aluminum foil of the present invention can be produced by the method described in "1. Method for Producing Perforated Aluminum Foil" above.

The thickness of the perforated aluminum foil is 1 µm or more and 50 µm or less, preferably 40 µm or less, and more preferably 25 µm or less. When the thickness is within the above-described range, the perforated aluminum foil can be suitably used as a current collector for electrical storage devices, in particular, as a current collector for lithium-ion capacitors.

The breaking strength is 4 N/10 mm or more and 20 N/10 mm or less, preferably 4.5 N/10 mm or more and 15 N/10 mm or less, more preferably 5 N/10 mm or more and 12 N/10 mm or less, and even more preferably 5.5 N/10 mm or more and 10 N/10 mm or less.

Further, the stress is preferably 20 N/mm² or more and 200 N/mm² or less, more preferably 25 N/mm² or more and 150 N/mm² or less, and even more preferably 30 N/mm² or more and 100 N/mm² or less.

The breaking elongation is preferably 0.1% or more and 3% or less, more preferably 0.5% or more and 2% or less, and even more preferably 0.7% or more and 1.5% or less.

When the breaking strength, stress, and breaking elongation of the perforated aluminum foil are within the above-described ranges, continuous processes such as a roll-to-roll process can be endured, and therefore the production efficiency of the perforated aluminum foil is improved.

The average diameter of the holes in the perforated aluminum foil is 1 µm or more and 50 µm or less, preferably 3 µm or more and 30 µm or less, more preferably 5 µm or more and 25 µm or less, and even more preferably 7 µm or more and 20 µm or less. When the average hole diameter is within the above-described range, pre-doping with lithium ions can be efficiently performed, and the perforated aluminum foil can be suitably used as a current collector for lithium-ion capacitors.

Further, a ratio of the maximum hole diameter to the average hole diameter is 4 or less, preferably 3.8 or less, more preferably 3.6 or less, and even more preferably 3.5 or less. When the ratio of the maximum hole diameter to the average hole diameter is within the above-described range, reduction in tensile strength is suppressed, and continuous processes such as a roll-to-roll process can be endured, and therefore the production efficiency of the perforated aluminum foil is improved.

Further, the number of the holes in the perforated aluminum foil is 1.0 x 10³ holes/cm² or more and 5.0 x 10⁴ holes/cm² or less, preferably 3.0 x 10³ holes/cm² or more and 4.0 x 10⁴ holes/cm² or less, more preferably 5.0 x 10³ holes/cm² or more and 3.0 x 10⁴ holes/cm² or less, and even more preferably 7.0 x 10³ holes/cm² or more and 2.0 x 10⁴ holes/cm² or less. When the number of the holes is within the above-described range, the balance between tensile strength and pre-doping efficiency is good, and the perforated aluminum foil can be suitably used as a current collector for lithium-ion capacitors.

The aperture ratio of the perforated aluminum foil is 10% or less, preferably 5% or less, more preferably 4% or less, and even more preferably 3% or less. The lower limit of the aperture ratio is preferably 0.10% or more, more preferably 0.15% or more, and even more preferably 0.20% or more. When the aperture ratio is within the above-described range, the balance between tensile strength and pre-doping efficiency is good, and the perforated aluminum foil can be suitably used as a current collector for lithium-ion capacitors.

The air permeability of the perforated aluminum foil is less than 70 seconds, preferably less than 40 seconds, more preferably less than 30 seconds, and even more preferably less than 20 seconds. Note that the lower limit of the air permeability is preferably 0 second or more, more preferably 0.5 second or more, and even more preferably 1.0 second or more. When the air permeability is within the above-described range, pre-doping with lithium ions can be efficiently performed, and the perforated aluminum foil can be suitably used as a current collector for lithium-ion capacitors.

Further, the average pitch of the holes in the perforated aluminum foil is preferably 10 µm or more and 500 µm or less, more preferably 30 µm or more and 250 µm or less, even more preferably 50 µm or more and 150 µm or less, and particularly preferably 60 µm or more and 100 µm or less. When the hole pitch is within the above-described range, the balance between tensile strength and pre-doping efficiency is good, and the perforated aluminum foil can be suitably used as a current collector for lithium-ion capacitors.

The surface roughness (arithmetic average roughness Ra) of the unperforated portion of the perforated aluminum foil is preferably 0.01 µm or more and 0.20 µm or less, more preferably 0.02 µm or more and 0.15 µm or less, even more preferably 0.03 µm or more and 0.10 µm or less, and particularly preferably 0.04 µm or more and 0.07 µm or less. When the surface roughness of the unperforated portion is within the above-described range, reduction in tensile strength is suppressed, and continuous processes such as a roll-to-roll process can be endured, and therefore the production efficiency of the perforated aluminum foil is improved.

These physical properties can be measured according to the methods described in the Examples.

### 3. Current Collector for Electrical Storage Devices

The current collector for electrical storage devices of the present invention is composed of the perforated aluminum foil of the present invention described above. In the current collector for electrical storage devices of the present invention, the perforated aluminum foil has a plurality of through holes penetrating therethrough in the thickness direction, and therefore, for example, when used for a lithium-ion capacitor, pre-doping with lithium ions can be efficiently performed in a short time and lithium ions can be dispersed more uniformly, and it makes it possible to cope with increase in capacity, and it is possible to provide an electrical storage device in which a balance between high output density and high energy density is achieved.

### EXAMPLES

Hereinafter, the present invention will be described more specifically by way of working examples and comparative examples, but the present invention is not limited to the working examples.

The physical properties were measured by the methods described below.

### 1. Analysis of holes

The perforated aluminum foils obtained in the Examples and Comparative Examples were observed using an optical microscope (MX63L manufactured by Olympus Corporation) with the light from below that is attached to the device being turned on. The observation area was 3570 x 2230 µm. The obtained microscope images were binarized using an image analysis software (WinROOF2018 manufactured by Mitani Corporation), and the number of holes [holes], the maximum hole area [µm²], and the total area of holes [µm²] in the observation area of 3570 x 2230 µm were calculated.

### (1) Number of Holes

The number of holes [holes/cm²] was calculated using the following formula. $Number of holes \left[\frac{holes}{{cm}^{2}}\right] = \frac{Number of holes \left[holes\right]}{3570 \left[μm\right] \times 2230 \left[μm\right]} \times {10}^{8}$

### (2) Average Hole Diameter

The average hole diameter [µm] was calculated using the following formula. $Average hole diameter \left[μm\right] = 2 \times \sqrt{\frac{Total area of holes \left[{μm}^{2}\right]}{Number of holes \left[holes\right] \times π}}$

### (3) Maximum Hole Diameter

The maximum hole diameter [µm] was calculated using the following formula. $Maximum hole diameter \left[μm\right] = 2 \times \sqrt{\frac{Maximum hole area \left[{μm}^{2}\right]}{π}}$

### (4) Average Pitch

The average pitch [µm] was calculated using the following formula. $Average pitch \left[μm\right] = \sqrt{\frac{3570 \left[μm\right] \times 2230 \left[μm\right] - Total area of holes \left[{μm}^{2}\right]}{Number of holes \left[holes\right]}}$

### (5) Aperture Ratio

The aperture ratio [%] was calculated using the following formula. $Aperture ratio \left[%\right] = \frac{Total area of holes \left[{μm}^{2}\right]}{3570 \left[μm\right] \times 2230 \left[μm\right]} \times 100$

### 2. Measurement of Air Permeability

The air permeability of each of the perforated aluminum foils obtained in the Examples was measured by the Oken-type testing method in accordance with JIS P 8117-2009, using a digital Oken-type air permeability tester (manufactured by ASAHI SEIKO CO., LTD., REG02-5/6-1M/2M). Note that since the number of holes of each of the perforated aluminum foils obtained in the Comparative Examples is zero, the air permeability thereof is infinite and unmeasurable.

### 3. Measurement of Surface Roughness of Unperforated Portion

The arithmetic average roughness (Ra) of each of the aluminum foils as the raw materials (Reference Examples) and the perforated aluminum foils obtained in the Examples was measured in accordance with JIS B 0601-2001 using a laser microscope (manufactured by KEYENCE CORPORATION, product name "VK-X250"). The unperforated portions were measured. Note that since the number of holes of each of the perforated aluminum foils obtained in the Comparative Examples is zero, the values of the surface roughness of the unperforated portion are the same as those of the Reference Examples (unprocessed).

### 4. Tensile Test

Each of the aluminum foils as the raw materials (Reference Examples) and the perforated aluminum foils obtained in the Examples was cut into a size of 10 mm (width) x 140 mm (length), and using a Tensilon universal testing machine (manufactured by A&D Company, Limited, RTG-1210), the foil was fixed so that the chuck distance became 100 mm, and at a tensile speed of 10 mm/min, the breaking strength [N/10 mm], stress [N/mm²] and breaking elongation [%] were measured five times, and the average values thereof were calculated. Note that since the number of holes of each of the perforated aluminum foils obtained in the Comparative Examples is zero, the values of the tensile strength are the same as those of the Reference Examples (unprocessed).

### [Example 1]

A first aqueous composition, which was obtained by adding sodium hydroxide to 38.0 kg of pure water in an amount in which the final amount thereof became 5% by mass (2.0 kg), and a second aqueous composition, which was obtained by adding hydrochloric acid (as halide ions) to 26.3 kg of pure water in an amount in which the final amount thereof became 12% by mass (13.7 kg of 35% by mass hydrochloric acid), were prepared. Using a roll-to-roll device (manufactured by SHINWA IND. CO., LTD., immersion type) capable of performing the process of alkaline cleaning --> water washing --> formation of through holes (etching) --> water washing --> drying, an aluminum foil (A1N30 (soft), thickness: 20 µm, width: 300 mm, length: 10 m) was processed at the temperatures and for the times shown in Table 1 to obtain a perforated aluminum foil. Regarding the obtained perforated aluminum foil, analysis of holes, measurement of air permeability, measurement of surface roughness of unperforated portions, and tensile test were performed.

### [Examples 2 and 3]

A perforated aluminum foil was obtained in a manner similar to that in Example 1, except that the temperatures and times for the processing with the roll-to-roll device were changed as shown in Table 1.

### [Examples 4 to 6]

A perforated aluminum foil was obtained in a manner similar to that in Example 1, except that the first aqueous composition was changed to one obtained by adding sodium hydroxide to 142.5 kg of pure water in an amount in which the final amount thereof became 5% by mass (7.5 kg); the second aqueous composition was changed to one obtained by adding hydrochloric acid (as halide ions) to 52.6 kg of pure water in an amount in which the final amount thereof became 12% by mass (27.4 kg of 35% by mass hydrochloric acid); the roll-to-roll device was changed to another roll-to-roll device (manufactured by SHINWA IND. CO., LTD., top and bottom spray type); and the temperatures and times for the processing were changed as shown in Table 1.

### [Examples 7 to 13]

A perforated aluminum foil was obtained in a manner similar to that in Example 1, except that the first aqueous composition was changed to one obtained by adding sodium hydroxide to 1800 g of pure water in an amount in which the final amount thereof became 5% by mass (100 g); the second aqueous composition was changed to one obtained by adding hydrochloric acid (as halide ions) to 1314 g of pure water in an amount in which the final amount thereof became 12% by mass (686 g of 35% by mass hydrochloric acid); without using a roll-to-roll device, the first aqueous composition, second aqueous composition, and pure water were respectively put in different trays, and an aluminum foil was immersed therein in the order of alkaline cleaning --> water washing --> formation of through holes (etching) --> water washing at the temperatures and for the times shown in Table 1 and then dried sufficiently; and the aluminum foil was changed as shown in Table 1 (thickness: 12 µm, width: 70 mm, length: 140 mm).

### [Example 14]

The first aqueous composition was changed to one obtained by adding sodium hydroxide to 180 g of pure water in an amount in which the final amount thereof became 5% by mass (10 g), and the second aqueous composition was changed to one obtained by adding hydrochloric acid (as halide ions) to 154 g of pure water in an amount in which the final amount thereof became 8% by mass (46 g of 35% by mass hydrochloric acid). Without using a roll-to-roll device, the first aqueous composition, second aqueous composition, and pure water were respectively put in different trays, and an aluminum foil (A1N30 (soft), thickness: 20 µm, width: 30 mm, length: 30 mm) was immersed therein in the order of alkaline cleaning --> water washing --> formation of through holes (etching) --> water washing at the temperatures and for the times shown in Table 1 and then dried sufficiently to obtain a perforated aluminum foil.

### [Examples 15 to 20]

A perforated aluminum foil was obtained in a manner similar to that in Example 14, except that the first aqueous composition, the second aqueous composition, and the temperatures and times for the processing were changed as shown in Table 1.

### [Comparative Example 1]

A perforated aluminum foil was obtained in a manner similar to that in Example 14, except that the time between the processing 1 (alkaline cleaning) and the processing 2 (formation of through holes) was set to 30 minutes; and the first aqueous composition, the second aqueous composition, and the temperatures and times for the processing were changed as shown in Table 1.

### [Comparative Example 2]

A perforated aluminum foil was obtained in a manner similar to that in Example 14, except that the time between the processing 1 (alkaline cleaning) and the processing 2 (formation of through holes) was set to 30 minutes and drying was performed; and the first aqueous composition, the second aqueous composition, and the temperatures and times for the processing were changed as shown in Table 1.

### [Comparative Example 3]

A perforated aluminum foil was obtained in a manner similar to that in Example 14, except that the second aqueous composition for the processing 2 was not prepared; and the processing time was changed as shown in Table 1.

### [Comparative Example 4]

A perforated aluminum foil was obtained in a manner similar to that in Example 14, except that the first aqueous composition for the processing 1 was not prepared; and the second aqueous composition for the processing 2 and the processing time were changed as shown in Table 1.

**[Table 1]**

| **Table 1A** | | | | | | | | | | |
|---|---|---|---|---|---|---|---|---|---|---|
| | **Material** | **Processing method** | **Processing 1 (alkaline cleaning)** | | | **Processing 2 (formation of through holes)** | | | **Between processing 1 and processing 2** | |
| | | | **NaOH** | **Temperature** | **Time** | **Halide ions** | **Temperature** | **Time** | **Time** | **Presence or absence of drying** |
| | | | **[wt%]** | **[°C]** | **[sec]** | **[wt%]** | **[°C]** | **[sec]** | **[min]** | |
| **Example 1** | **A1N30 (soft)** | **Immersion** | **5.0** | **31** | **40** | **12** | **31** | **34** | **1** | **Absent** |
| **Example 2** | **A1N30 (soft)** | **Immersion** | **5.0** | **32** | **31** | **12** | **34** | **26** | **1** | **Absent** |
| **Example 3** | **A1N30 (soft)** | **Immersion** | **5.0** | **35** | **20** | **12** | **38** | **17** | **1** | **Absent** |
| **Example 4** | **A1N30 (soft)** | **Spray** | **5.0** | **33** | **22** | **12** | **22** | **22** | **1** | **Absent** |
| **Example 5** | **A1N30 (soft)** | **Spray** | **5.0** | **33** | **19** | **12** | **24** | **19** | **1** | **Absent** |
| **Example 6** | **A1N30 (soft)** | **Spray** | **5.0** | **34** | **14** | **12** | **24** | **14** | **1** | **Absent** |
| **Example 7** | **A1N30 (soft)** | **Immersion** | **5.0** | **30** | **10** | **12** | **30** | **20** | **1** | **Absent** |
| **Example 8** | **A8079 (soft)** | **Immersion** | **5.0** | **30** | **20** | **12** | **30** | **10** | **1** | **Absent** |
| **Example 9** | **A1N30 (hard)** | **Immersion** | **5.0** | **30** | **50** | **12** | **30** | **40** | **1** | **Absent** |
| **Example 10** | **A8011 (soft)** | **Immersion** | **5.0** | **30** | **20** | **12** | **30** | **10** | **1** | **Absent** |
| **Example 11** | **A8021 (soft)** | **Immersion** | **5.0** | **30** | **30** | **12** | **30** | **20** | **1** | **Absent** |
| **Example 12** | **A8079 (hard)** | **Immersion** | **5.0** | **30** | **30** | **12** | **30** | **25** | **1** | **Absent** |
| **Example 13** | **A8011 (soft)** | **Immersion** | **5.0** | **30** | **20** | **12** | **30** | **30** | **1** | **Absent** |
| **Reference Example 1** | **A1N30 (soft)** | **-** | **-** | **-** | **-** | **-** | **-** | **-** | **-** | **-** |
| **Reference Example 2** | **A1N30 (soft)** | **-** | **-** | **-** | **-** | **-** | **-** | **-** | **-** | **-** |
| **Reference Example 3** | **A8079 (soft)** | **-** | **-** | **-** | **-** | **-** | **-** | **-** | **-** | **-** |
| **Reference Example 4** | **A1N30 (hard)** | **-** | **-** | **-** | **-** | **-** | **-** | **-** | **-** | **-** |
| **Reference Example 5** | **A8011 (soft)** | **-** | **-** | **-** | **-** | **-** | **-** | **-** | **-** | **-** |
| **Reference Example 6** | **A8021 (soft)** | **-** | **-** | **-** | **-** | **-** | **-** | **-** | **-** | **-** |
| **Reference Example 7** | **A8079 (hard)** | **-** | **-** | **-** | **-** | **-** | **-** | **-** | **-** | **-** |

| **Table 1B** | | | | | | | | | | |
|---|---|---|---|---|---|---|---|---|---|---|
| | **Aluminum foil** | **Processing method** | **Processing 1 (alkaline cleaning)** | | | **Processing 2 (formation of through holes)** | | | **Between processing 1 and processing 2** | |
| | | | **NaOH** | **Temperature** | **Time** | **Halide ions** | **Temperature** | **Time** | **Time** | **Presence or absence of drying** |
| | | | **[wt%]** | **[°C]** | **[sec]** | **[wt%]** | **[°C]** | **[sec]** | **[min]** | |
| **Example 14** | **A1N30 (soft)** | **Immersion** | **5.0** | **30** | **60** | **8** | **30** | **60** | **1** | **Absent** |
| **Example 15** | **A1N30 (soft)** | **Immersion** | **5.0** | **30** | **30** | **12** | **30** | **30** | **1** | **Absent** |
| **Example 16** | **A1N30 (soft)** | **Immersion** | **5.0** | **40** | **30** | **12** | **40** | **30** | **1** | **Absent** |
| **Example 17** | **A1N30 (soft)** | **Immersion** | **5.0** | **30** | **60** | **12** | **30** | **30** | **1** | **Absent** |
| **Example 18** | **A1N30 (soft)** | **Immersion** | **5.0** | **30** | **90** | **12** | **30** | **30** | **1** | **Absent** |
| **Example 19** | **A1N30 (soft)** | **Immersion** | **5.0** | **30** | **30** | **12** | **30** | **90** | **1** | **Absent** |
| **Example 20** | **A1N30 (hard)** | **Immersion** | **5.0** | **30** | **60** | **12** | **30** | **60** | **1** | **Absent** |
| **Comparative Example 1** | **A1N30 (soft)** | **Immersion** | **5.0** | **30** | **60** | **12** | **30** | **90** | **30** | **Absent** |
| **Comparative Example 2** | **A1N30 (soft)** | **Immersion** | **5.0** | **30** | **60** | **12** | **30** | **90** | **30** | **Present** |
| **Comparative Example 3** | **A1N30 (soft)** | **Immersion** | **5.0** | **30** | **120** | - | - | - | - | - |
| **Comparative Example 4** | **A1N30 (soft)** | **Immersion** | - | - | - | **12** | **30** | **120** | - | - |

**[Table 2]**

| | **Thickness** | **Number of holes** | **Average hole diameter** | **Maximum hole diameter** | **Maximum/Average** | **Average pitch** | **Aperture ratio** | **Air permeability** | **Unopened portion Ra** | **Tensile test** | | |
|---|---|---|---|---|---|---|---|---|---|---|---|---|
| | | | | | | | | | | **Breaking strength** | **Stress** | **Breaking elongation** |
| | **[µm]** | **[holes/cm²]** | **[µm]** | **[µm]** | **[-]** | **[µm]** | **[%]** | **[sec]** | **[µm]** | **[N/10 mm]** | **[N/mm²]** | **[%]** |
| **Example 1** | **20** | **2.1×10⁴** | **11** | **37** | **3.4** | **67** | **2.0** | **2** | **0.064** | **4.8** | **24.0** | **1.1** |
| **Example 2** | **20** | **1.1×10⁴** | **10** | **31** | **3.1** | **93** | **0.9** | **4** | **0.069** | **4.8** | **24.0** | **1.0** |
| **Example 3** | **20** | **4.8×10³** | **8** | **25** | **3.1** | **144** | **0.2** | **16** | **0.063** | **7.3** | **36.5** | **1.5** |
| **Example 4** | **20** | **1.2×10⁴** | **10** | **28** | **2.8** | **90** | **0.9** | **4** | **0.047** | **5.9** | **29.5** | **1.3** |
| **Example 5** | **20** | **4.7×10³** | **8** | **25** | **3.1** | **145** | **0.2** | **11** | **0.051** | **8.0** | **40.0** | **1.6** |
| **Example 6** | **20** | **4.1×10³** | **8** | **27** | **3.4** | **155** | **0.2** | **13** | **0.053** | **8.7** | **43.5** | **2.0** |
| **Example 7** | **12** | **1.5×10⁴** | **12** | **37** | **3.1** | **82** | **1.7** | **4** | **0.053** | **5.7** | **47.5** | **1.8** |
| **Example 8** | **12** | **9.8×10³** | **17** | **40** | **2.4** | **100** | **2.2** | **5** | **0.068** | **6.7** | **55.8** | **1.2** |
| **Example 9** | **12** | **4.8×10³** | **13** | **46** | **3.5** | **144** | **0.6** | **4** | **0.052** | **7.5** | **62.5** | **0.7** |
| **Example 10** | **12** | **1.6×10³** | **12** | **26** | **2.2** | **248** | **0.2** | **61** | **0.043** | **10.9** | **90.8** | **0.7** |
| **Example 11** | **12** | **1.1×10⁴** | **7** | **18** | **2.6** | **93** | **0.4** | **42** | **0.058** | **5.3** | **44.2** | **0.9** |
| **Example 12** | **12** | **3.8×10³** | **10** | **31** | **3.1** | **162** | **0.3** | **19** | **0.108** | **4.0** | **33.3** | **0.5** |
| **Example 13** | **12** | **3.1×10⁴** | **11** | **41** | **3.7** | **56** | **2.9** | **2** | **0.051** | **4.3** | **35.8** | **0.5** |
| **Reference Example 1** | **20** | **0** | - | - | - | - | **0.0** | - | **0.047** | **10.6** | **0.0** | **2.1** |
| **Reference Example 2** | **12** | **0** | - | - | - | - | **0.0** | - | **0.052** | **5.7** | **47.5** | **1.9** |
| **Reference Example 3** | **12** | **0** | - | - | - | - | **0.0** | - | **0.056** | **7.2** | **60.0** | **1.1** |
| **Reference Example 4** | **12** | **0** | - | - | - | - | **0.0** | - | **0.032** | **20.4** | **170.0** | **1.5** |
| **Reference Example 5** | **12** | **0** | - | - | - | - | **0.0** | - | **0.046** | **11.2** | **93.3** | **0.9** |
| **Reference Example 6** | **12** | **0** | - | - | - | - | **0.0** | - | **0.037** | **7.8** | **65.0** | **1.3** |
| **Example Reference7** | **12** | **0** | - | - | - | - | **0.0** | - | **0.082** | **17.7** | **147.5** | **1.3** |

**Table 2B**

| | **Thickness** | **Number of holes** | **Average hole diameter** | **Average pitch** | **Aperture ratio** |
|---|---|---|---|---|---|
| | **[µm]** | **[holes/cm²]** | **[µm]** | **[µm]** | **[%]** |
| **Example 14** | **20** | **3.4×10⁴** | **16** | **53** | **6.8** |
| **Example 15** | **20** | **5.0×10³** | **11** | **141** | **0.5** |
| **Example 16** | **20** | **1.4×10⁴** | **11** | **84** | **1.3** |
| **Example 17** | **20** | **3.3×10⁴** | **23** | **51** | **13.7** |
| **Example 18** | **20** | **7.5×10⁴** | **17** | **33** | **17.0** |
| **Example 19** | **20** | **4.3×10⁴** | **20** | **45** | **13.5** |
| **Example 20** | **30** | **1.1×10⁴** | **11** | **96** | **1.0** |
| **Comparative Example 1** | **20** | **0** | **-** | **-** | **-** |
| **Comparative Example 2** | **20** | **0** | **-** | **-** | **-** |
| **Comparative Example 3** | **20** | **0** | **-** | **-** | **-** |
| **Comparative Example 4** | **20** | **0** | **-** | **-** | **-** |

As shown in Tables 1 and 2, according to the method of the present invention, through holes can be formed by a simple and easy method in which alkaline cleaning and subsequent chemical etching are performed. A perforated aluminum foil obtained has holes with uniform hole diameters in the aluminum foil, is excellent in air permeability and tensile strength, and can be suitably used as a current collector for electrical storage devices.

### REFERENCE SIGNS LIST

- 1: aluminum foil
- 2: oxide film (passivation film)
- 3: through holes

## Claims

1. A method for producing a perforated aluminum foil which has a plurality of through holes penetrating therethrough in the thickness direction, the method comprising:
an alkaline cleaning step in which a first aqueous composition containing 1% by mass or more and 10% by mass or less of alkali is brought into contact with the surface of an aluminum foil; and
a through hole forming step in which a second aqueous composition containing 1% by mass or more and 30% by mass or less of halide ions is brought into contact with the surface of the aluminum foil within 20 minutes after the alkaline cleaning step so as to form the through holes in the thickness direction of the aluminum foil.

2. The method for producing a perforated aluminum foil according to claim 1, wherein the alkali is a hydroxide of an alkali metal or an alkaline earth metal.

3. The method for producing a perforated aluminum foil according to claim 1, wherein the halide ions are chloride ions.

4. The method for producing a perforated aluminum foil according to claim 1, wherein the aluminum foil has a thickness of 1 µm or more and 50 µm or less.

5. The method for producing a perforated aluminum foil according to claim 1, wherein the aluminum purity of the aluminum foil is 98% by mass or more but less than 99.9% by mass.

6. The method for producing a perforated aluminum foil according to any one of claims 1 to 5, wherein in the alkaline cleaning step, the processing temperature is 10°C or higher and 50°C or lower and the processing time is 5 seconds or more and 120 seconds or less.

7. The method for producing a perforated aluminum foil according to any one of claims 1 to 5, wherein in the through hole forming step, the processing temperature is 10°C or higher and 50°C or less and the processing time is 5 seconds or more and 120 seconds or less.

8. A perforated aluminum foil which has a plurality of through holes penetrating therethrough in the thickness direction, wherein:
the perforated aluminum foil has a thickness of 1 µm or more and 50 µm or less;
the breaking strength is 4 N/10 mm or more and 20 N/10 mm or less;
the average hole diameter is 1 µm or more and 50 µm or less, and a ratio of the maximum hole diameter to the average hole diameter is 4 or less.

9. The perforated aluminum foil according to claim 8, wherein:
the number of the holes is 1.0 x 10³ holes/cm² or more and 5.0 x 10⁴ holes/cm² or less;
the aperture ratio is 10% or less; and
the air permeability is less than 70 seconds.

10. A current collector for electrical storage devices, comprising the perforated aluminum foil according to claim 8 or 9.
